# EUROPEAN PATENT SPECIFICATION

(11) **EP 0 352 945 B1**
(45) Date of publication and mention of the grant of the patent: **24.08.1994**
(21) Application number: 89307157.1
(22) Date of filing: 14.07.1989
(51) Int. Cl.: F16C 11/06

(54) **A ball study assembly**
Kugelzapfenzusammenbau
Montage d'une queue de rotule

(30) Priority: 29.07.1988 GB 8818081
(43) Date of publication of application: 31.01.1990
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR); FORD MOTOR COMPANY, Dearborn, MI 48120 (US)
(72) Inventor: Conner, Frederick David, Brentwood Essex CM13 3PG (GB)
(74) Representative: Messulam, Alec Moses

(56) References cited:
- DE-A- 2 851 054
- DE-A- 2 900 042
- FR-A- 2 517 388
- GB-A- 2 196 308

## Description

This invention relates to a ball stud assembly for securely mounting the ball part of a ball and socket joint.

Ball and socket joints are used, for example, in suspension linkages where it is important that the ball stud be securely and reliably mounted in its socket.

German patent document number DE-A-2 900 042 discloses the use of a ball stud assembly comprising a ball formed at the end of a shank, and a mounting assembly for receiving and securing the shank, the mounting component having a first bore for receiving the shank and a second bore intersecting the first bore for receiving a clamping bolt, with the material of the component which surrounds the first bore being interrupted by a slot which extends from the first bore and traverses the second bore so that tightening of the clamping bolt reduces the diameter of the first bore.

According to the present invention, there is provided a ball stud assembly comprising a ball formed at the end of a shank, and a mounting component for receiving and securing the shank, the mounting component having a first bore for receiving the shank and a second bore intersecting the first bore for receiving a clamping bolt, with the material of the component which surrounds the first bore being interrupted by a slot which extends from the first bore and traverses the second bore so that tightening of the clamping bolt reduces the diameter of the first bore, characterised in that the shank has two axially separated cylindrical portions with the portion further from the ball having a diameter smaller than the portion nearer the ball, the portion being separated by a circumferential goove which will accept that part of the clamping bolt extending into the first bore, and in that the first bore has axially spaced cylindrical portions of different diameters for receiving the respective cylindrical portions of the shank.

The two spaced cylindrical portions of the first bore are separated by a shoulder, which is preferably positioned so as to engage with the leading edge of the larger diameter cylindrical portion on the shank, to locate the shank in the first bore.

Preferably both the cylindrical portions of the shank and both the cylindrical portions of the first bore have a right circular form.

The circumferential groove preferably has a part circular shape having a radius substantially equal to that of the second bore.

The relative diameters of the two cylindrical portions of the shank are preferably such that when the smaller diameter portion is located in the larger diameter portion of the first bore, the clamping bolt cannot then tighten sufficiently to grip the shank.

The invention will now be further described, by way of example, with reference to the accompanying drawing, in which:
Figure 1 is a section through a ball stud assembly in accordance with the invention, on the line I-I from Figure 2; and
Figure 2 is a view of the assembly of Figure 1 taken in the direction of the arrow A.

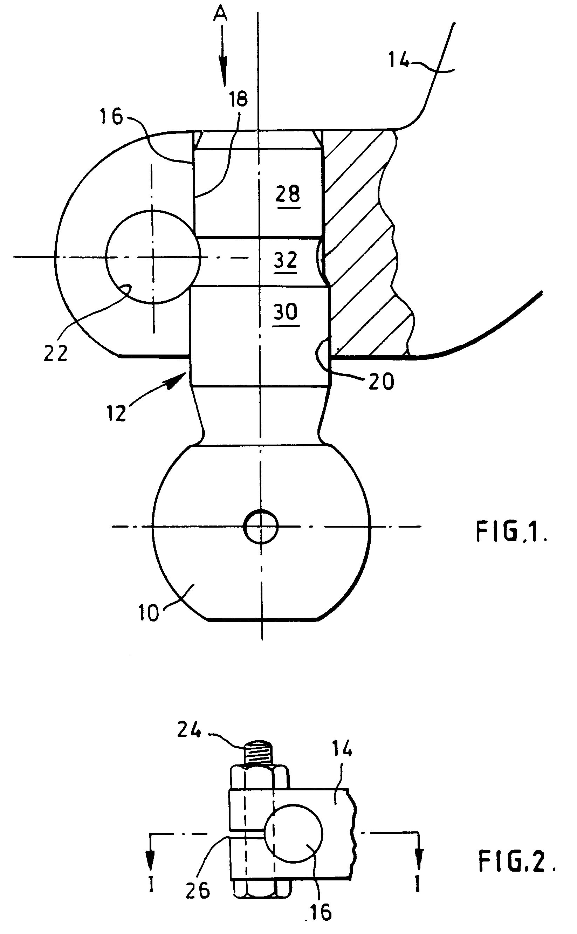

The ball stud comprises a ball 10 on the end of a shank 12. The ball stud is to be secured in an arm 14. To receive the stud the arm 14 has a stepped ( first) bore 16 with a smaller diameter portion 18 and a larger diameter portion 20. The portion 18 is separated from the portion 20 by a chamfered shoulder. A second bore 22 extends through the arm, perpendicular to the first bore 16 and receives a clamping bolt 24 (Figure 2). The bolt 24 crosses a slot 26 cut out of the material of the arm and extending to the edge of the arm so that tightening of the bolt clamps the material around the shank 12 placed in the first bore 16.

The shank 12 also has a narrower diameter, cylindrical portion 28 and a larger diameter portion 30. These two portions are separated by a neck 32 in the form of a part-circular circumferential groove, and the top of the larger diameter portion 30 comes into contact with the chamfered shoulder between the portion 18 and 20 of the bore 16 to limit insertion movement at the point where the neck 32 registers with the bore 22.

This construction prevents misassembly of the ball stud to the arm as follows:
For proper assembly the ball stud is placed in the bore 16 as shown, with the bolt 24 absent until the top of the portion 30 stops against the shoulder in the bore 16. The bolt 24 is then put in place and because the bore 22 intersects the bore 16, the mere act of placing the bolt 24 in its bore 22 locks the stud in place and, if the stud is not already correctly positioned, it will be drawn up into the bore as the bolt 24 is inserted. Tightening of the nut on the clamp bolt 24 draws the sides of the slot 26 together and holds the ball stud securely.

If the ball stud is only partially inserted into the bore 16 and the bolt 24 is put in place entirely above the shank, then the shank will always and obviously be a loose fit since insertion of the bolt 24 above the portion 28 cannot close the larger diameter portion 20 of the bore 16 sufficiently to grip the smaller diameter region 28.

On initial insertion of the ball stud, the narrower cylindrical portion 28 will enter the wider bore section 20, as a loose fit, up to a point where the clamp bolt cannot be inserted at all until the ball stud is correctly positioned, and this helps to ensure that the stud and the arm can only be assembled correctly.

It is necessary to ensure that, when the assembly is properly completed, there is no clearance between the hole diameter and the ball stud shank diameter. The construction described allows this desirable condition to be achieved without making the assembly unduly difficult.

The cylindrical portions 28 and 30 of the shank and the portions 18 and 20 of the bore 16 will normally be concentric. It is significant that the larger diameter part of the assembly is nearer the ball 10 than the smaller diameter part and therefore withstands the higher larger load.

## Claims

1. A ball stud assembly comprising a ball (10) formed at the end of a shank (12), and a mounting component (14) for receiving and securing the shank (12), the mounting component (14) having a first bore (16) for receiving the shank (12) and a second bore (22) intersecting the first bore (16) for receiving a clamping bolt (24), with the material of the component (14) which surrounds the first bore (16) being interrupted by a slot (26) which extends from the first bore (16) and traverses the second bore (22) so that tightening of the clamping bolt (24) reduces the diameter of the first bore (16), characterised in that the shank (12) has two axially separated cylindrical portions (28, 30) with the portion (28) further from the ball (10) having a diameter smaller than the portion (30) nearer the ball (10), the portion being separated by a circumferential goove (32) which will accept that part of the clamping bolt (24) extending into the first bore (16), and in that the first bore (16) has axially spaced cylindrical portions (20 and 18) of different diameters for receiving the respective cylindrical portions (30 and 28) of the shank (12).

2. A ball stud assembly as claimed in Claim 1, wherein the two spaced cylindrical portions (18 and 20) of the bore (16) are separated by a shoulder which is positioned so as to engage with the leading edge of the larger diameter cylindrical portion (30) on the shank (12), to locate the shank (12) in the first bore (16).

3. An assembly as claimed in Claim 1 or Claim 2, wherein the cylindrical portions (28 and 30) of the shank (12) and both the cylindrical portions (18 and 20) of the first bore (16) have a right circular form.

4. An assembly as claimed in any preceding claim, wherein the cylindrical portions (28 and 30) of the shank (12) and the cylindrical portions (18 and 20) of the first bore (16) are all concentric.

5. An assembly as claimed in any preceding claim, wherein the circumferential groove (32) in the shank (12) has a part circular shape having a radius substantially equal to that of the second bore (22).

6. An assembly as claimed in any preceding claim, wherein the relative diameters of the two cylindrical portions (28 and 30) of the shank (12) are such that when the smaller diameter portion (28) is located in the larger diameter portion (20) of the first bore (16), the clamping bolt (24) cannot tighten sufficiently to grip the shank (12).

## Patentansprüche

1. Kugelzapfen-Einheit mit einer am Ende eines Schaftes (12) angeformten Kugel (10) und einem Einbauteil (14) zur Aufnahme und Befestigung des Schaftes (12), wobei das Einbauteil (14) eine erste Bohrung (16) zur Aufnahme des Schaftes (12) und eine die erste Bohrung (16) schneidende zweite Bohrung (22) zur Aufnahme einer Spannschraube (24) aufweist, wobei das die erste Bohrung (16) umgebende Material des Einbauteils (14) von einem Schlitz (26) durchbrochen ist, der sich von der ersten Bohrung (16) aus erstreckt und die zweite Bohrung (22) durchquert, so daß das Anziehen der Spannschraube (24) den Durchmesser der ersten Bohrung (16) verringert,
dadurch gekennzeichnet, daß der Schaft (12) zwei axial von einander getrennte Zylinderabschnitte (28, 30) aufweist, wobei der von der Kugel (10) weiter entfernte Abschnitt (28) einen kleineren Durchmesser aufweist als der näher an der Kugel (10) liegende Abschnitt (30), wobei die Abschnitte über eine Umfangsnut (32) von einander getrennt sind, die denjenigen Teil der Spannschraube (24) aufnimmt, der sich in die erste Bohrung (16) hinein erstreckt, sowie dadurch, daß die erste Bohrung (16) axial von einander beabstandete Zylinderabschnitte (20 und 18) unterschiedlichen Durchmessers zur Aufnahme der jeweiligen Zylinderabschnitte (30 und 28) des Schaftes (12) aufweist.

2. Kugelzapfen-Einheit nach Anspruch 1, worin die beiden zu einander beabstandeten Zylinderabschnitte (18 und 20) der Bohrung (16) durch eine Schulter von einander getrennt sind, die so angeordnet ist, daß sie mit der Vorderkante des im Durchmesser größeren Teils (30) des Schaftes (12) in Eingriff gelangt, so daß der Schaft (12) in der ersten Bohrung (16) positioniert wird.

3. Einheit nach Anspruch 1 oder Anspruch 2, worin die Zylinderabschnitte (28 und 30) des Schaftes (12) und die beiden Zylinderabschnitte (18 und 20) der ersten Bohrung (16) eine gerade kreisrunde Form aufweisen.

4. Einheit nach einem beliebigen der vorangehenden Ansprüche, worin die Zylinderabschnitte (28 und 30) des Schaftes (12) und die Zylinderabschnitte (18 und 20) der ersten Bohrung (16) alle konzentrisch sind.

5. Einheit nach einem beliebigen der vorangehenden Ansprüche, worin die in dem Schaft (12) vorgesehene Umfangsnut (32) einen teilkreisförmigen Querschnitt aufweist, mit einem Radius, der im wesentlich gleich dem der zweiten Bohrung (22) ist.

6. Einheit nach einem beliebigen der vorangehenden Ansprüche, worin das Verhältnis der Durchmesser der beiden Zylinderabschnitte (28 und 30) des Schaftes (12) zueinander derart ist, daß, wenn sich der im Durchmesser kleinere Abschnitt (28) in dem im Durchmesser größeren Abschnitt (20) der ersten Bohrung (16) befindet, die Spannschraube (24) das Bauteil nicht ausreichend spannen kann, um den Schaft (12) festzuklemmen.

## Revendications

1. Unité de goujon de rotule comprenant une rotule (10) formée à l'extrémité d'une tige (12), et un composant de montage (14) destiné à recevoir et à fixer la tige (12), le composant de montage (14) présentant un premier alésage (16) destiné à recevoir la tige (12) et un second alésage (22) coupant le premier alésage (16) de manière à recevoir un boulon de serrage (24), le matériel du composant (14) entourant le premier alésage (16) étant interrompu par une fente (26) qui s'étend depuis le premier alésage (16) et traverse le second alésage (22), de sorte que le resserrage du boulon de serrage (24) réduit le diamètre du premier alésage (16), caractérisé en ce que la tige (12) présente deux portions cylindriques (28, 30) séparées de manière axiale, la portion (28) la plus éloignée de la rotule (10) présentant un diamètre inférieur à la portion (30) la plus proche de la rotule (10), la portion étant séparée par une rainure circonférentielle (32) qui accepte cette partie du boulon de serrage (24) s'étendant dans le premier alésage (16), et en ce que le premier alésage (16) présente des portions cylindriques de diamètres différents (20 et 18) espacées de manière axiale destinées à recevoir les portions cylindriques respectives (28 et 30) de la tige (12).

2. Unité de goujon de rotule selon la revendication 1, dans laquelle les deux portions cylindriques espacées (18 et 20) de l'alésage (16) sont séparées par un épaulement qui est placé de manière à s'engager avec l'arête avant de la portion cylindrique (30) de diamètre supérieur de la tige (12), afin de placer la tige (12) dans le premier alésage (16).

3. Unité selon la revendication 1 ou 2, dans laquelle les portions cylindriques (28 et 30) de la tige (12) et les deux portions cylindriques (18 et 20) du premier alésage (16) ont une forme circulaire droite.

4. Unité selon l'une des revendications précédentes, dans laquelle les portions cylindriques (28 et 30) de la tige (12) et les portions cylindriques (18 et 20) du premier alésage (16) sont toutes concentriques.

5. Unité selon l'une des revendications précédentes, dans laquelle la rainure circonférentielle (32) dans la tige (12) a une forme partiellement circulaire dont le rayon est essentiellement égal à celui du second alésage (22).

6. Unité selon l'une des revendications précédentes, dans laquelle les diamètres relatifs des deux portions cylindriques (28 et 30) de la tige (12) sont tels que lorsque la portion de diamètre inférieur (28) est placée dans la portion de diamètre supérieur (30) du premier alésage (16), le boulon de serrage (24) ne peut pas se resserrer suffisamment pour saisir la tige (12).
